# EUROPÄISCHE PATENTSCHRIFT

(11) **EP 3 102 863 B1**
(45) Veröffentlichungstag und Bekanntmachung des Hinweises auf die Patenterteilung: **11.04.2018**
(21) Anmeldenummer: 14823953.6
(22) Anmeldetag: 16.12.2014
(51) Int. Cl.: F16K 31/06, F01P 7/14, F16K 17/04, F01P 7/16

(54) **ELEKTROMAGNETVENTIL SOWIE VERBRENNUNGSMOTORKÜHLSYSTEM MIT ELEKTROMAGNETVENTIL**
ELECTROMAGNETIC VALVE AND INTERNAL COMBUSTION ENGINE COOLING SYSTEM WITH ELECTROMAGNETIC VALVE
SOUPAPE ÉLECTROMAGNÉTIQUE ET SYSTÈME DE REFROIDISSEMENT DE MOTEUR À COMBUSTION INTERNE ÉQUIPÉ D'UNE SOUPAPE ÉLECTROMAGNÉTIQUE

(30) Priorität: 05.02.2014 DE 102014101437
(43) Veröffentlichungstag der Anmeldung: 14.12.2016
(73) Patentinhaber: Eto Magnetic GmbH, 78333 Stockach (DE)
(72) Erfinder: FANGAUER, Philipp, 78465 Konstanz (DE)
(74) Vertreter: Patentanwälte Behrmann Wagner PartG mbB
(86) Internationale Anmeldenummer: PCT/EP2014/078000
(87) Internationale Veröffentlichungsnummer: WO 2015/117707

(56) Entgegenhaltungen:
- EP-A1- 0 492 109
- DE-A1- 4 438 334
- DE-A1- 19 815 778

## Beschreibung

Die Erfindung betrifft ein, vorzugsweise spannungsgesteuertes, Elektromagnetventil gemäß dem Oberbegriff des Anspruchs 1, insbesondere zum Schließen eines Bypasses in einem Kühlmittelkreislauf eines Verbrennungsmotors, mit einer bestrombaren Wicklung und einem durch Bestromen der Wicklung in Richtung eines Kerns verstellbaren Anker, der einen Ventilstößel bei bestromter Wicklung in Richtung einer Schließstellung, insbesondere entgegen der Federkraft einer Rückstellfeder, kraftbeaufschlagt. Ferner betrifft die Erfindung ein Verbrennungsmotorkühlsystem gemäß Anspruch 10.

Kühlmittelsysteme für Kraftfahrzeugverbrennungsmotoren umfassen üblicherweise zwei unterschiedlich große Kühlwasserkreisläufe zwischen denen in Abhängigkeit der Fahrzeugmotortemperatur umgeschaltet werden kann. Dabei wird das Kühlwasser üblicherweise in einem sogenannten kleinen Kühlwasserkreislauf mittels der Kühlwasserpumpe gefördert, um den Fahrzeugmotor schneller auf eine optimale Betriebstemperatur zu bringen, und somit Emissionen zu reduzieren. Danach wird das Kühlwasser üblicherweise in einem sogenannten großen Kühlwasserkreislauf gefördert, wodurch der Fahrzeugmotor stärker gekühlt wird, um eine Überhitzung zu vermeiden. Bekannt ist es, zur Umschaltung zwischen den Kühlwasserkreisläufen einen Ventilschieber einzusetzen, der hydraulisch mit Kühlwasser betätigbar ist. Hierzu ist ein mit Kühlwasser beaufschlagter Schaltraum über eine Bypassleitung mit dem Kühlwassertank verbunden und es wird dauerhaft Kühlwasser über eine kleine Fluidpumpe, insbesondere eine Kolbenpumpe in den Schaltraum gefördert. Um den Schieber zu betätigen, wird die Bypassleitung zu dem Kühlwassertank mittels eines Elektromagnetventils verschlossen, so dass der Druck im Schaltraum ansteigt, da weiterhin über die vorgenannte kleine Pumpe Kühlwasser in den Schaltraum gefördert wird. Überschreitet der Fluiddruck im Schaltraum einen vordefinierten kritischen Druckwert, wird der Anker des Elektromagneten entgegen der wirkenden elektromagnetischen Kraft verstellt, so dass das Elektromagnetventil öffnet und zu Zwecken des Druckabbaus Kühlwasser über den nun wieder geöffneten Bypass in Richtung Kühlwassertank strömen kann. Da es sich bei dem eingesetzten Elektromagnetventil um ein spannungsgesteuertes Schaltventil handelt, musste bisher die Magnetkraft so ausgelegt werden, dass das Elektromagnetventil bei einer vorgegebenen minimalen elektrischen Spannung und einer maximalen Temperatur den erforderlichen Minimaldruck im Schaltraum noch halten kann, damit der Schieber nicht den großen Kühlwasserkreislauf öffnet. Dies führt jedoch dazu, dass das Magnetventil bei einer maximalen Spannung und einer minimalen Temperatur eine deutlich höhere Schließkraft aufbringt und der Druck im Schaltraum (Schieberraum) unzulässig hoch ansteigen kann.

Aus der DE 198 15 778 A1 ist ein Elektromagnetventil mit einer bestrombaren Wicklung und einem durch Bestromen der Wicklung in Richtung eines Kerns verstellbaren Anker bekannt, der ein Ventilstößel bei bestromter Wicklung in Richtung einer Schließstellung entgegen der Federkraft einer Rückstellfeder kraftbeaufschlagt, wobei ein bei Bestromung des Ankers zusammen mit dem Anker zum Verstellen des Ventilstößels in Richtung der Schließstellung verstellbarer Bolzen vorgesehen ist, über den der Ventilstößel durch Verstellen des Ankers bei Bestromung in Richtung der Schließstellung kraftbeaufschlagbar ist, und der von einer Druckbegrenzungsfeder in Richtung der Schließstellung des Ventilstößels federkraftbeaufschlagt ist und der über den Ventilstößel bei einer axialen Ventilstößelbewegung des Ventilstößels aus seiner Schließstellung heraus zum Öffnen des Elektromagnetventils trotz in Richtung des Kerns verstellten Ankers entgegen der Federkraft der Druckbegrenzungsfeder verstellbar ist. Bei der bekannten Lösung sind der Bolzen und die Druckfeder in eine Ankerbohrung integriert, wodurch die magnetischen Verstellkräfte begrenzt sind bzw. reduziert werden. Ein ähnlich aufgebautes Elektromagnetventil mit in einer Ankerbohrung angeordneten Druckfeder sowie einem als kreiszylindrische Scheibe ausgebildeten Bolzen ist in der EP 0 492 109 A1 beschrieben.

Aus der DE 44 38 334 A1 ist ein alternatives Elektromagnetventil mit Überdruckventilfunktionalität bekannt, wobei hier eine Druckfeder in einem Käfig aufgenommen ist, der abschnittsweise radial benachbart zum Ventilstößel angeordnet ist. Der Ventilstößel ist endseitig unmittelbar im Käfig aufgenommen und die Rückstellfeder stützt sich unmittelbar am Käfig ab und wirkt somit mittelbar auf das in einem oberen Bereich verbreiterte und damit im Käfig gefangene Stellelement.

Ausgehend von dem vorgenannten Stand der Technik liegt der Erfindung daher die Aufgabe zugrunde, eine Vorrichtung zu schaffen, die in konstruktiv einfacher und bauraumoptimierter Weise einsetzbar ist, um einen unzulässigen Überdruck in einem Schaltraum eines Kühlmittelsystems zu verhindern. Ferner besteht die Aufgabe darin, ein entsprechend optimiertes Verbrennungsmotorkühlsystem anzugeben.

Diese Aufgabe wird hinsichtlich der Vorrichtung mit einem Elektromagnetventil mit den Merkmalen des Anspruchs 1 und hinsichtlich des Verbrennungsmotorkühlsystems mit den Merkmalen des Anspruchs 10 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Die Erfindung hat erkannt, dass zur Begrenzung eines maximalen Fluiddrucks ein Druckbegrenzungsventil vorgesehen werden kann. Weiter hat die Erfindung erkannt, dass es ungünstig ist, ein solches (zusätzliches) Druckbegrenzungsventil in einem Kühlmittelpumpengehäuse unterzubringen, da hierzu zusätzlich zu dem mit dem Elektromagnetventil öffnen- und schließbaren Bypass ein weiterer Bypass für das Druckbegrenzungsventil benötigt würde, was zu einem erheblichen konstruktiven Aufwand führen würde. Darüber hinaus würde der Bauraumbedarf steigen und es wäre eine grundsätzliche Abänderung des Kühlmittelmediumpumpengehäuses (insbesondere Wasserpumpengehäuse) notwendig, wodurch der konstruktive Aufwand nochmals steigen würde. Zur Minimierung des Bauraumbedarfs und zur Realisierung einer konstruktiv überraschend einfachen Lösung schlägt die Erfindung daher vor, das Druckbegrenzungsventil bzw. eine Druckbegrenzungsfunktionalität in das Elektromagnetventil zu integrieren und zwar durch das Vorsehen eines zusammen mit dem Anker verstellbaren Bolzens und einer den Bolzen in Richtung auf den Ventilstößel federkraftbeaufschlagende Druckbegrenzungsfeder. Im Gegensatz zu dem bekannten Elektromagnetventil ohne Druckbegrenzungsfunktion wirkt bei dem nach dem Konzept der Erfindung ausgebildeten Elektromagnetventil der Anker nicht mehr unmittelbar mit dem Ventilstößel zusammen, um diesen in seine Schließstellung zu bewegen, sondern nur noch mittelbar über den bei Bestromung des Ankers zusammen mit dem Anker verstellbaren Bolzen. Die vorerwähnte Druckbegrenzungsfeder, die den Bolzen in Richtung auf den Ventilstößel federkraftbeaufschlagt, ermöglicht es dabei, durch die Realisierung eines ausreichenden (weiteren) Vorspannweges, dass der Ventilstößel bei Druckkraftbeaufschlagung, insbesondere aufgrund eines Kühlmittelfluiddruckes in einem Schaltraum axial aus seiner Schließstellung entgegen der Federkraft der Druckbegrenzungsfeder heraus verstellt wird und dadurch das Elektromagnetventil öffnet, obwohl die elektromagnetische Wicklung noch bestromt und der Anker in Richtung Kern verstellt ist. Somit öffnet bei Integration des nach dem Konzept der Erfindung ausgebildeten Elektromagnetventils mit Druckbegrenzungsmitteln in ein Verbrennungsmotorkühlsystem der Bypass, wodurch das Kühlmedium aus dem Schaltraum, insbesondere in Richtung eines Kühlmitteltanks, bzw. Vorratsbehälters abströmen kann und dadurch der Druck im Schaltraum begrenzt oder abgebaut werden kann. In einem Verbrennungsmotorkühlkreislauf mit einem nach dem Konzept der Erfindung ausgebildeten Magnetventil kann auf eine separate Abfuhrleitung bzw. einem separaten Bypass zum Abführen von dem Kühlmedium bei Überschreitung eines kritischen Drucks verzichtet werden, indem der ohnehin vorgesehene Bypass zur Abführung von dem Kühlmedium aus dem Schaltraum durch Nichtbestromung der elektromagnetischen Wicklung des Elektromagnetventils geöffnet und zur Abführung von dem Kühlmedium bei kritischen Überdruck genutzt wird.

Das nach dem Konzept der Erfindung ausgebildete Elektromagnetventil eignet sich, wie beschrieben, bevorzugt zum Einsatz in Verbrennungsmotorkühlsystemen, ist auf diesen Einsatz jedoch nicht beschränkt. Durch die erfindungsgemäße Integration der Druckbegrenzungsfunktionalität in das Elektromagnetventil kann der statische Öffnungsdruck des Ventils - unabhängig von der anliegenden Magnetkraft - nahezu frei durch die Auswahl und/oder das Vorspannungsmaß der Druckbegrenzungsfeder gewählt werden. Darüber hinaus ist es möglich, die Druckbegrenzungsfunktion bei minimiertem Bauraum, insbesondere bauraumneutral in das Elektromagnetventil zu integrieren.

Das nach dem Konzept der Erfindung ausgebildete Elektromagnetventil eignet sich grundsätzlich für alle spannungsgesteuerten NO-Schaltventilanwendungen, bei denen gegen einen bestimmten Druck geschlossen werden muss, jedoch aufgrund von elektrischen Spannungs-Temperaturtoleranzen zum Schutz des Systems ein zusätzliches Druckbegrenzungsventil eingesetzt werden sollte/müsste.

Um durch Integration der Druckbegrenzungsfunktionalität in das Elektromagnetventil keine oder schlechtestensfalls nur geringe Einschränkungen der Ventilfunktion durch einen erhöhten Druckabfall im geöffneten, abgefallenen (nicht bestromten) Zustand hinnehmen zu müssen, sind in Weiterbildung der Erfindung Mittel zum Einhalten einer minimalen Druckbegrenzungsfedervorspannung vorgesehen. Anders ausgedrückt wird durch eine entsprechende Anordnung der Druckbegrenzungsfeder erreicht, dass sich die Druckbegrenzungsfeder im abgefallenen Zustand nicht unzulässig lang verlängert, was den Ventilhub verringern und zu einem größeren Druckabfall bei geöffnetem Ventil führen würde. Erfindungsgemäß ist vorgesehen, den Bolzen und die Druckfeder nicht in den Anker zu integrieren, sondern in einen zwischen dem Anker und dem Ventilstößel angeordneten Käfig, der eine unzulässige Längung der Druckfeder verhindert.

Die erste Variante eignet sich insbesondere für vergleichsweise kleine Elektromagnetventile mit kleiner Magnetkraft und hat den Vorteil einer minimierten axialen Baulänge.

Wie eingangs erwähnt, ist es dann, wenn die axiale Baulänge des Elektromagnetventils, eine untergeordnete Rolle spielt, und vorzugsweise eine größere Wicklung zur Erzeugung größerer Magnetkräfte zum Einsatz kommt, erfindungsgemäß vorgesehen, die Druckbegrenzungsfeder und den Bolzen nicht in den Anker zu integrieren, sondern in einen axial zwischen dem Anker und dem Ventilstößel angeordneten Käfig, der dazu dient, eine definierte minimale Vorspannung der Druckbegrenzungsfeder aufrecht zu erhalten. Besonders zweckmäßig ist es, wenn der Käfig mit Druckfeder und Bolzen bei entsprechender Bestromung des Ankers von diesem zumindest abschnittsweise in den Kern hineinverstellt wird, vorzugsweise, zumindest näherungsweise, vollständig, wenn sich der Ventilstößel in seiner Schließstellung befindet.

Zur Einstellung der Vorspannung der Druckbegrenzungsfeder ist es vorteilhaft, wenn sich diese auf der von dem Bolzen abgewandten Seite an einem Widerlagerelement, insbesondere einer Buchse, bevorzugt einer Einpressbuchse abstützt, die (mittelbar oder unmittelbar) am und/oder im Käfig festgelegt ist.

Im Hinblick auf die Dimensionierung der Druckbegrenzungsfeder ist es vorteilhaft, wenn die Federkraft der Druckbegrenzungsfeder bei in Richtung Kern verstelltem, insbesondere am Kern abstützenden Ankers, jedenfalls bei sich in der Schließstellung befindlichen Ventilstößel größer ist als die Federkraft der Rückstellfeder.

Im Hinblick auf die Minimierung der axialen Baulänge ist es vorteilhaft, wenn der Bolzen unmittelbar mit dem Ventilstößel zusammenwirkt, ohne dazwischen angeordnetes Kraftübertragungsbauteil.

Grundsätzlich ist es denkbar, dass der Ventilstößel unmittelbar mit dem Ventilsitz, insbesondere zum Schließen eines Bypasses in einem Verbrennungsmotorkühlsystems zusammenwirkt. Im Hinblick auf eine optimierte Dichtfunktion ist es jedoch vorteilhaft, wenn der Ventilstößel mit einem Schließkörper, insbesondere einer Ventilkugel, zusammenwirkt, die der Ventilstößel in seiner Schließposition in den Ventilsitz presst und dadurch das Ventil bei bestromter Wicklung schließt.

Wie eingangs erwähnt, ist es besonders zweckmäßig, wenn das Elektromagnetventil spannungsgesteuert ist, wobei noch weiter bevorzugt die Steuerspannung von Temperaturmessmitteln vorgegeben und/oder bereitgestellt wird, die beispielsweise die Temperatur eines Kühlmediums messen. Insofern soll ein System offenbart und beanspruchbar sein, in dem ein nach dem Konzept der Erfindung ausgebildetes Elektromagnetventil über unterschiedlich große elektrische Spannungen angesteuert ist bzw. wird.

Im nicht bestromten (abgefallenen) Zustand, verhält sich das nach dem Konzept der Erfindung ausgebildete Elektromagnetventil gleich wie eine Stand der Technik Variante ohne Druckbegrenzungsfunktionalität, der magnetische Flusskreis bzw. die durch Bestromen der elektromagnetischen Wicklung erzeugbare Magnetkraft und die Druckbegrenzungsfeder sind bevorzugt so ausgelegt, dass auch im angezogenen Zustand bei einer niedrigen bzw. minimal notwendigen Steuerspannung, beispielsweise 9,8 V, zum Schließen des Ventils das Elektromagnetventil öffnenbar ist, wenn die unmittelbar oder vorzugsweise mittelbar über den Schließkörper auf den Ventilstößel wirkenden Druckkräfte größer werden als die auf den Anker wirkende Magnetkraft.

Bevorzugt sind der magnetische Flusskreis (insbesondere durch entsprechende Dimensionierung der Wicklung) und die Druckbegrenzungsfeder weiter so ausgelegt, dass bei einer maximalen bzw. maximal zulässigen Ansteuerspannung, beispielsweise von 16 Volt die Magnetkraft so hoch ist, dass diese nicht durch die Druckkraft bei einem kritischen Druck in einem Schieberraum (oder sonstigem Druckraum) überwunden werden kann, wohl aber die Druckkraft der Druckbegrenzungsfeder, so dass das Elektromagnetventil trotz bestromter Wicklung bzw. in Richtung Kern verstelltem Anker öffnet, in dem der Ventilstößel relativ zu dem dann vorzugsweise unbewegten Anker entgegen der Druckkraft der Druckfeder axial aus der Schließstellung heraus in Richtung Anker verstellt wird, und dabei den Bolzen gegen die Druckbegrenzungsfeder verstellt um das Elektromagnetventil trotz Bestromung zu öffnen, und dabei unzulässige Drücke in einem Bereich vor dem Ventilsitz zu vermeiden. Die Verstellung des Ventilstößels wird ermöglicht, da sich die Druckbegrenzungsfeder bei in Richtung Kern verstelltem Anker (noch weiter) durch Verstellen des Bolzens vorgespannt werden kann. Es muss also zum Öffnen des Ventils nicht mehr die Magnetkraft überwunden werden, sondern lediglich die in der Druckbegrenzungsfeder gespeicherte Kraft.

Insgesamt hängt also der statische Öffnungsdruck des Ventils von der Federkraft der Druckbegrenzungsfeder ab. Bevorzugt ist die Rückstellfeder so dimensioniert, dass der Anker bei der zum Schließen des Elektromagnetventils minimal notwendigen elektrischen Spannung bei in der Schließstellung befindlichen Ventilstößel über einen Restluftspalt von dem Kern axial beabstandet ist und sich bei maximal zulässiger Spannung am Kern, insbesondere über eine Antiklebscheibe oder eine Antiklebrille, abstützt, dass also bei maximal zulässiger Spannung der Restluftspalt nochmals überwunden wird.

Die Erfindung führt auch auf ein Verbrennungsmotorkühlsystem mit einem nach dem Konzept der Erfindung ausgebildeten Elektromagnetventil. Das Verbrennungsmotorkühlsystem umfasst eine (große) Kühlmediumpumpe zum Umwälzen der Kühlmediums, insbesondere Kühlwassers, in einem großen und/oder kleinen Kühlmittelkreislauf, wobei zwischen den unterschiedlichen Kühlmittelkreisläufen mittels eines hydraulisch betätigbaren Schiebers gewechselt werden kann, der über einen Kühlmediumdruck in einem Schaltraum betätigbar ist. Diesem Schaltraum, genauer einem aus dem Schaltraum ausmündenden Bypass, der vorzugsweise zu einem Kühlmediumtank führt, ist ein nach dem Konzept der Erfindung ausgebildeter Elektromagnet mit integrierter Druckbegrenzungsfunktionalität zugeordnet, bei durch Bestromen der elektromagnetischen Wicklung geschlossenem Elektromagnetventil ist der Bypass geschlossen und der Druck im Schaltraum steigt dadurch, dass eine zusätzlich zur Kühlmediumpumpe vorgesehene (kleine) Pumpe Kühlmedium in den Schaltraum fördert. Überschreitet der Druck im Schaltraum einen definierten Grenzdruck, der bei gegebener Steuerspannung des Elektromagnetventils jedoch nicht dazu ausreicht, die auf den Anker wirkende Magnetkraft zu überwinden, wird der Ventilstößel des Elektromagnetventils entgegen der Federkraft der Druckbegrenzungsfeder trotz bestromter Wicklung verstellt und das Ventil öffnet trotz in Richtung Kern verstelltem Anker.

Bevorzugt wird zur Umstellung von dem kleinen Kühlmittelkreislauf auf den großen Kühlmittelkreislauf das Elektromagnetventil, insbesondere über eine entsprechend geringe Steuerspannung unterhalb der minimal notwendigen Steuerspannung zum Verstellen des Ankers in Richtung Kern geöffnet. Die vorzugsweise vorgesehene Rückstellfeder des Elektromagnetvenils sorgt in diesem Fall für eine Verstellung des Ventilstößels aus seiner Schließstellung und einer Rückstellung des Ankers axial weg vom Kern.

Besonders zweckmäßig ist es, wenn das Elektromagnetventil, der Schieber zum Umschalten zwischen den Kühlkreisläufen die Kühlmediumpumpe in einem gemeinsamen, vorzugsweise als Metallgussgehäuse ausgebildeten Gehäuse angeordnet sind.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a: ein nicht nach dem Konzept der Erfindung ausgebildetes Elektromagnetventil im abgefallenen Zustand zu Erläuterungszwecken,
- Fig. 1b: ein Detail X aus Fig. 1a zu Erläuterungszwecken,
- Fig. 2a: das nicht erfindungsgemäße Elektromagnetventil gemäß Fig. 1a im bestromten und trotzdem aufgrund seiner Druckbegrenzungsfunktionalität geöffneten Zustand zu Erläuterungszwecken,
- Fig. 2b: ein Detail X aus Fig. 2a zu Erläuterungszwecken,
- Fig. 3: stark schematisiert eine erfindungsgemäße Ausführungsform, bei welcher eine Druckbegrenzungsfeder und ein Bolzen nicht wie in den vorhergehenden Ausführungsbeispielen in den Anker integriert, sondern in einem zwischen dem Anker und dem Ventilstößel vorgesehenen Käfig angeordnet sind,
- Fig. 4: stark schematisiert ein Verbrennungsmotor Kühlsystem mit einem nur angedeuteten, nach dem Konzept der Erfindung ausgebildeten Elektromagnetventil.

In den Figuren sind gleiche Elemente und Elemente mit der gleichen Funktion mit den gleichen Bezugszeichen gekennzeichnet.

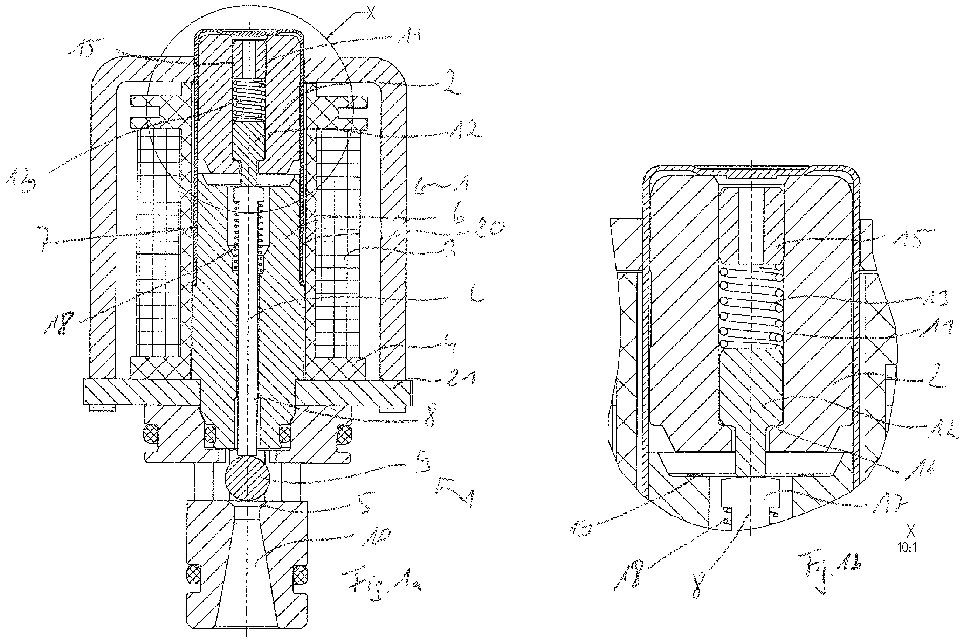

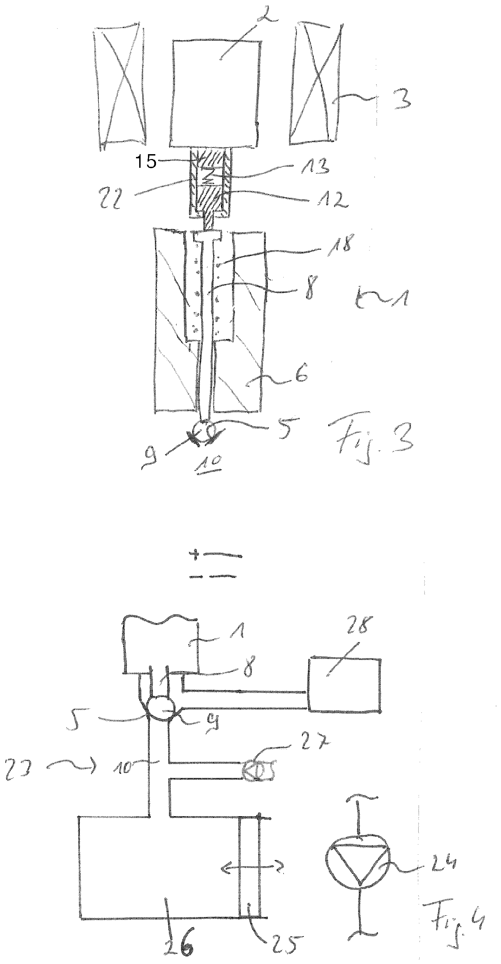

In den Fig. 1a und 1b ist ein spannungsgesteuertes Elektromagnetventil 1 gezeigt, bevorzugt zum Einsatz in einem Verbrennungsmotorkühlsystem, wie dieses beispielhaft in Fig. 4 gezeigt ist.

Das Elektromagnetventil 1 umfasst einen Anker 2, der durch Bestromen einer elektrischen Wicklung 3, die auf einem Spulenhalter 4 angeordnet ist, axial entlang einer Längsachse L (Verstellachse) verstellbar ist und zwar in Richtung eines Ventilsitzes 5. In den Fig. 1a und 1b ist der abgefallene Zustand gezeigt, d.h. ein Zustand bei welchem die Wicklung 3 nicht bestromt ist oder die anliegende Steuerspannung nicht ausreicht den Anker 2 axial entlang der Längsachse L hin zu einem Kern 6 zu verstellen.

Aus Fig. 1a ist zu erkennen, dass der Anker 2 längsverstellbar in einem Ankerführungstopf 7 geführt ist, in welchen der Kern 6 eingeschoben ist.

Der Kern 6 ist axial durchsetzt von einem langgestreckten und sich entlang der Längsachse L erstreckenden Ventilstößel 8, der mit seinem vom Anker 2 abgewandten Ende mit einem hier als Kugel ausgebildeten Schließkörper 9 zusammenwirkt und diesen bei Bestromung der Wicklung 3 in seinen Ventilsitz 5 presst und damit eine Fluidleitung 10 hier konkret einen Bypass verschließt.

Wie sich unmittelbar aus den Fig. 1a und 1b ergibt, wirkt der Anker 2 nicht unmittelbar mit dem Ventilstößel 8 zusammen, sondern über einen innerhalb des Ankers 2, genauer innerhalb einer zentrischen Ankerbohrung 11 (Durchgangsöffnung) entlang der Längsachse L verstellbaren Bolzen 12, welcher von einer ebenfalls in der Ankerbohrung 12 aufgenommenen Druckbegrenzungsfeder 13 in Richtung einer Schließstellung des Ventilstößels 8, d.h. in Richtung des Ventilsitzes 5 federkraftbeaufschlagt ist.

Die Druckbegrenzungsfeder 13 stützt sich mit ihrem von dem Bolzen 12 abgewandten Ende an einem Widerlagerelement 15 ab, welches hier als Einpressbuchse ausgebildet ist, die axial in die Ankerbohrung 11 (eine Zentralbohrung) von hinten her, d.h. von einer von dem Bolzen 12 abgewandten Seite eingepresst ist. Die Einpresstiefe bestimmt hierbei die Vorspannung der Druckbegrenzungsfeder 13.

Wie sich weiter aus einer Zusammenschau zeigt ist zu erkennen, dass innerhalb des Ankers 2 auf einer von der Druckbegrenzungsfeder 13 abgewandten Seite des Bolzens 12 ein als Ringschulter ausgebildeter Bolzenanschlag 16 innerhalb des Ankers 2 realisiert ist, um die Relativverstellbewegung des Bolzens 12 relativ zum Anker 2 in Richtung Ventilsitz 5 zu begrenzen.

Der Bolzen 12 stützt sich axial auf ein verdicktes Ende 17 des Ventilstößels 8 ab und verstellt den Ventilstößel 8 bei ausreichender Bestromung der Wicklung 3 so in Richtung seiner Schließstellung, d.h. in Richtung Ventilsitz 5.

Vorgenannter Verstellbewegung wirkt eine Rückstellfeder 18 entgegen, die sich auf einer von dem Bolzen 12 abgewandten Ringfläche des Ventilstößels 8, im konkreten Beispiel des Endes 17 abstützt. Die Druckbegrenzungsfeder 13 ist dabei stärker ausgelegt als die Rückstellfeder 18.

Zur Optimierung des magnetischen Flusskreises wirken Anker 2 und Kern 6 über Konusflächen zusammen, wobei zur Vermeidung eines Klebens des Ankers 2 am Kern 6 entsprechende Antiklebmittel 19, etwa eine Antiklebscheibe oder eine Rillung vorgesehen werden können.

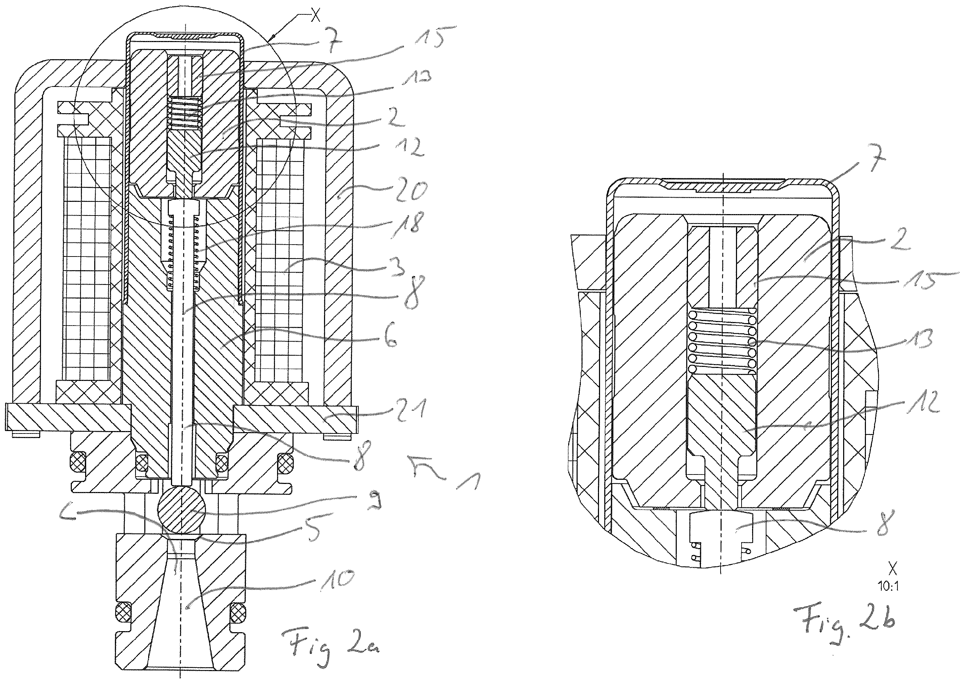

Wird die elektromagnetische Wicklung 3 mit einer ausreichenden Steuerspannung belegt, wirkt eine magnetische Kraft auf den Anker 2, so dass dieser in eine in den Fig. 2a und 2b gezeigte Position in Richtung des Kerns, d.h. in Richtung des Ventilsitzes 5 verstellt wird. Der magnetische Fluss verläuft dabei über ein metallisches Gehäuse 20 und den Ankerführungstopf 7 in den Anker 2 und durch diesen axial in Richtung Kern 6, wobei ein axialer Luftspalt zwischen Anker 2 und Kern 6 überwunden wird und der magnetische Fluss in der Zeichnungsebene innerhalb des Kerns 6 weiter nach unten zu einer Jochplatte 21 verläuft und in dieser radial nach außen wieder in das topfartige oder bügelförmige Metallgehäuse 20.

Durch das Verstellen des Ankers 2 in die in den Fig. 2a und 2b gezeigte Axialposition drückt der Bolzen 12 entlang der Längsachse L gegen den Ventilstößel 8 in Richtung seiner Schließstellung, wodurch dieser bei ausreichend geringem Druck in der Fluidleitung 10 bzw. unterhalb des Ventilsitzes 5 das Ventil bzw. die Fluidleitung 10 schließt.

Steigt die Druckkraft innerhalb der Fluidleitung 10 (d.h. in einen Bereich vor dem Ventilsitz) auf einen Wert an, der größer ist als die aus der Magnetkraft und der Rückstellfederkraft resultierende Schließkraft, wird der Anker 2 trotz Bestromung der Wicklung 3 axial von dem Ventilsitz 5 gedrückt und das Ventil öffnet. Das Ventil öffnet aufgrund der vorgesehenen Druckbegrenzungsfunktionalität jedoch auch, wenn die Magnetkraft bei entsprechend hoher Steuerspannung so hoch ist, dass die Druckkraft nicht ausreicht den Schließkörper 9 und den Ventilstößel 8 mitsamt des Ankers 2 von dem Kern 6 axial wegzuverstellen. Reicht nämlich die Druckkraft aus, um die resultierende Kraft aus der Federkraft der Druckbegrenzungsfeder 13 und der Rückstellfeder 18 zu überwinden, so werden der Schließkörper 9 und der Ventilstößel 8 bei in Richtung Kern verstelltem Anker aus einer Schließstellung heraus bewegt und die Druckbegrenzungsfeder 13 wird durch ein resultierendes axiales Verstellen des Bolzens 12 weiter vorgespannt. Der Bolzen 12 bewegt sich dabei relativ axial innerhalb des und zu dem Anker 2, welcher in seiner Axialposition verharrt. Hierdurch können unzulässige Überdrücke in der Fluidleitung 10 vermieden werden.

Das Ausführungsbeispiel eines Elektromagnetventils 1 gemäß Fig. 3 unterscheidet sich prinzipiell von der zuvor erläuterten Ausführungsform dadurch, dass der Bolzen 12 und die Druckbegrenzungsfeder 13 nicht im Anker 2 aufgenommen sind, sondern in einem entweder an dem Anker 2 festgelegten, oder bevorzugt von diesem separaten Käfig 22, der sich axial zwischen dem Anker 2 und dem Ventilstößel 8 befindet.

Gegenüberliegend stützt sich die Rückstellfeder 18 in einer Axialbohrung am Kern 6 ab.

Der Käfig 22 verhindert eine unzulässige Längung der Druckbegrenzungsfeder 13.

Die Druckbegrenzungsfeder 13 stützt sich auf der vom Bolzen 12 abgewandten Seite an einem im Käfig 22 festgelegten Widerlagerelement 15 ab.

Die axiale Baulänge des Ausführungsbeispiels gemäß Fig. 3 ist größer als die des zuvor beschriebenen Ausführungsbeispiels. Die Funktionsweise ist jedoch prinzipiell gleich, so dass bezüglich der Funktionsweise auf vorstehende Ausführungen verwiesen wird.

In Fig. 4 ist stark schematisiert ein Verbrennungsmotorkühlsystem 23 gezeigt. Dieses umfasst eine Kühlmediumpumpe 24 (Umwälzpumpe) zum Fördern von Kühlmedium, insbesondere Kühlwasser in zwei Kreisläufen.

Zum Umschalten zwischen den Kreisläufen ist ein hydraulisch betätigbarer Schieber 25 vorgesehen, dem ein Schaltraum 26 vorgeordnet ist, in welchen dauerhaft über eine kleine, beispielsweise als Kolbenpumpe ausgebildete Pumpe 27 Kühlmedium zugeführt wird.

Bei geschlossenem Elektromagnetventil 1, d.h. bei am Ventilsitz 5 anliegendem Schließkörper 9 steigt dadurch der Druck in dem Schaltraum 26 und der Schieber 25 wird so bewegt, dass ein kleiner Kühlmediumkreislauf frei geschaltet wird. Zum Umschalten auf einen großen Kühlmittelkreislauf muss der Druck im Schaltraum 26 abgesenkt werden. Dies kann beispielsweise durch eine entsprechend niedrige, vorzugsweise temperaturabhängige Steuerspannung am Elektromagnetventil 1 realisiert werden, so dass dessen Anker in einer Axialrichtung von dem Ventilsitz 5 wegverstellt wird und so das Elektromagnetventil öffnet und somit einen Bypass zu einem Kühlmediumtank 28 freigibt.

Ist die am Elektromagnetventil 1 anliegende Steuerspannung, beispielsweise aufgrund einer hohen Kühlmediumtemperatur hoch und der Druck im Schaltraum 26 steigt an, jedoch nicht so hoch, dass der Anker 2 entgegen der wirkenden Magnetkraft verstellt werden kann, öffnet das Elektromagnetventil 1 trotzdem aufgrund der realisierten Druckbegrenzungsfunktionalität, indem die Druckbegrenzungsfeder innerhalb des Elektromagnetventils weiter vorgespannt wird, aufgrund einer Axialbewegung des Schließkörpers 9, des Ventilstößels 8 sowie des Bolzens 12, so dass im Ergebnis das Ventil öffnet und Druck in Richtung Kühlmediumtank 28 abgebaut werden kann.

### Bezugszeichenliste

- 1: Elektromagnetventil
- 2: Anker
- 3: (elektrische) Wicklung
- 4: Spulenträger
- 5: Ventilsitz
- 6: Kern
- 7: Ankerführungstopf
- 8: Ventilstößel
- 9: Schließkörper
- 10: Fluidleitung
- 11: Ankerbohrung
- 12: Bolzen
- 13: Druckbegrenzungsfeder
- 15: Widerlagerelement
- 16: Bolzenanschlag
- 17: Ende
- 18: Rückstellfeder
- 19: Antiklebmittel
- 20: Metallgehäuse
- 21: Jochplatte
- 22: Käfig
- 23: Verbrennungsmotorkühlsystem
- 24: Kühlmediumpumpe
- 25: Schieber
- 26: Schaltraum
- 27: Pumpe
- 28: Kühlmediumtank

- L: Längsachse

## Patentansprüche

1. Elektromagnetventil (1), insbesondere zum Schließen eines Bypasses in einem Kühlmittelkreislauf eines Verbrennungsmotors, mit einer bestrombaren Wicklung (3) und einem durch Bestromen der Wicklung in Richtung eines Kerns verstellbaren Anker (2), der einen Ventilstößel (8) bei bestromter Wicklung (3) in Richtung einer Schließstellung, insbesondere entgegen der Federkraft einer Rückstellfeder (18), kraftbeaufschlagt, wobei ein bei Bestromung des Ankers (2) zusammen mit dem Anker zum Verstellen des Ventilstößels (8) in Richtung der Schließstellung verstellbarer Bolzen (12) vorgesehen ist, über den der Ventilstößel (8) durch Verstellen des Ankers (2) bei Bestromung in Richtung der Schließstellung kraftbeaufschlagbar ist, und der von einer Druckbegrenzungsfeder (13) in Richtung der Schließstellung des Ventilstößels (8) federkraftbeaufschlagt ist und der über den Ventilstößel (8) bei einer axialen Ventilstößelbewegung des Ventilstößels (8) aus seiner Schließstellung heraus zum Öffnen des Elektromagnetventils (1) trotz in Richtung des Kerns (6) verstellten Ankers (2) entgegen der Federkraft der Druckbegrenzungsfeder (13) verstellbar ist,
**dadurch gekennzeichnet,**
**dass** der Bolzen (12) und die Druckbegrenzungsfeder (13) in einem zwischen dem Anker (2) und dem Ventilstößel (8) angeordneten Käfig zur Begrenzung einer maximalen Längung der Druckbegrenzungsfeder (13) angeordnet sind, und dass sich die Druckbegrenzungsfeder (13) auf der dem Bolzen abgewandten Seite an einem am und/oder im Käfig (22) festgelegten Widerlagerelement, insbesondere einer Buchse, abstützt, durch dessen Axialposition relativ zu einem Bolzenanschlag (16) im Käfig (22) die Vorspannung der Druckbegrenzungsfeder (13) einstellbar und/oder eingestellt ist.

2. Elektromagnetventil (1) nach Anspruch 1,
**dadurch gekennzeichnet,**
**dass** Mittel zum Einhalten einer minimalen Druckbegrenzungsfedervorspannung vorgesehen sind.

3. Elektromagnetventil (1) nach einem der Ansprüche 1 oder 2,
**dadurch gekennzeichnet,**
**dass** bevorzugt der Käfig bei in der Schließstellung befindlichem Ventilstößel (8) zumindest abschnittsweise, bevorzugt vollständig, axial in den Kern hinein verstellt ist.

4. Elektromagnetventil (1) nach einem der vorhergehenden Ansprüche,
**dadurch gekennzeichnet,**
**dass** eine Federkraft der Druckbegrenzungsfeder (13) bei in Richtung Kern verstelltem Anker (2) und in der Schließstellung befindlichem Ventilstößel (8) größer ist als die Federkraft der Rückstellfeder (18).

5. Elektromagnetventil (1) nach einem der vorhergehenden Ansprüche,
**dadurch gekennzeichnet,**
**dass** der Bolzen (12) sich unmittelbar auf dem Ventilstößel (8) abstützt.

6. Elektromagnetventil (1) nach einem der vorhergehenden Ansprüche,
**dadurch gekennzeichnet,**
**dass** der Ventilstößel (8) mit einem Schließkörper (9), insbesondere einer Ventilkugel, zusammenwirkt, der von dem Ventilstößel (8) in seiner Schließstellung gegen einen Ventilsitz gepresst ist.

7. Elektromagnetventil (1) nach einem der vorhergehenden Ansprüche,
**dadurch gekennzeichnet,**
**dass** das Elektromagnetventil (1) spannungsgesteuert ist.

8. Elektromagnetventil (1) nach einem der vorhergehenden Ansprüche,
**dadurch gekennzeichnet,**
**dass** der magnetische Flusskreis und die Druckbegrenzungsfeder (13) so ausgelegt sind, dass bei einer für das Schließen des Elektromagnetventils minimal notwenigen Steuerspannung die auf den Ventilstößel (8) über den Anker (2) aufgebrachte Schließkraft geringer ist als die auf den Ventilstößel (8) aufgebrachte Federkraft und dass bei einer maximalen Steuerspannung, sowie einer zwischen der minimalen Steuerspannung und der maximalen Steuerspannung liegenden Grenzspannung, die über den Anker (2) auf den Ventilstößel (8) aufgebrachte Schließkraft größer ist als die über die Druckbegrenzungsfeder (13) auf den Ventilstößel (8) aufgebrachte Federkraft.

9. Elektromagnetventil (1) nach einem der vorhergehenden Ansprüche,
**dadurch gekennzeichnet,**
**dass** der Anker (2) bei der zum Schließen des Elektromagnetventils (1) minimalen Spannung bei in der Schließstellung befindlichem Ventilstößel (8) über einen Restluftspalt von dem Kern (6) beabstandet ist und/oder sich bei maximal zulässiger Spannung am Kern (6), insbesondere über eine Antiklebscheibe (19) oder Antiklebrille, abstützt.

10. Verbrennungsmotorkühlsystem (23) mit einer Kühlmediumpumpe (24) und mit einem Schieber (25) zum Umschalten zwischen einem kleinen und einem großen Kühlmittelkreislauf, wobei der Schieber (25) hydraulisch über einen Kühlmediumdruck in einem Schaltraum (26) betätigbar ist und wobei ein Elektromagnetventil (1) nach einem der vorhergehenden Ansprüche einen Bypass, insbesondere zu einem Kühlmitteltank, bei in der Schließstellung befindlichem Ventilstößel (8) zur Erhöhung des Kühlmediumdrucks schließt und wobei der Ventilstößel (8) bei einem unzulässig hohen Kühlmediumdruck in dem Schaltraum (26) trotz bestromter Wicklung (3) und in Richtung Kern (6) verstelltem Anker (2) aufgrund der von dem Kühlmedium, insbesondere über einen Ventilschließkörper, auf den Ventilstößel ausgeübten Kraft entgegen der Federkraft der Druckbegrenzungsfeder (13) bei gleichzeitiger Verstellung des Bolzens (12) aus der Schließstellung zur Öffnung des Elektromagnetventils (1) verstellbar ist und dadurch den Bypass öffnet.

11. Verbrennungsmotorkühlsystem (23) nach Anspruch 10, **dadurch gekennzeichnet,**
**dass** das Elektromagnetventil (1), der Schieber (25) und die Kühlmediumpumpe (24) in einem gemeinsamen Gehäuse, bevorzugt einen Metallgussgehäuse, angeordnet sind.

## Claims

1. An electromagnetic valve (1), in particular for purposes of closing a bypass in a coolant circuit of an internal combustion engine, with an energisable winding (3) and an armature (2) that can be displaced by energising the winding in the direction of a core, which applies a force to a valve stem (8) when the winding (3) is energised in the direction of a closure position, in particular against the spring force of a return spring (18), wherein a pin (12) is provided, which, when the armature (2) is energised, can be displaced together with the armature (2) for purposes of displacing the valve stem (8) in the direction of the closure position, and to which a spring force is applied by a pressure limiting spring (13) in the direction of the closing position of the valve stem (8), and which by way of the valve stem (8) in an axial movement of the valve stem (8) can be moved against the spring force of the pressure limiting spring (13) out of its closure position for purposes of opening the electromagnetic valve (1), despite the armature (2) being displaced in the direction of the core (6),
**characterised in**
**that**, the pin (12) and the pressure limiting spring (13) are arranged in a cage between the armature (2) and the valve stem (8) for purposes of limiting the maximum elongation of the pressure limiting spring (13), and in that on the side facing away from the pin the pressure limiting spring (13) is supported on an abutment element, in particular a bushing, fixed on and/or in the cage (22), by means of the axial position of which relative to a pin stop (16) in the cage (22) the preloading of the pressure limiting spring (13) can be and/or is adjusted.

2. The electromagnetic valve (1) in accordance with claim 1,
**characterised in**
**that**, means are provided for maintaining a minimum pressure limiting spring preload.

3. The electromagnetic valve (1) in accordance with one of the claims 1 or 2,
**characterised in**
**that**, when the valve stem (8) is located at least partially, preferably completely, in the closure position, the cage is preferably axially displaced into the core.

4. The electromagnetic valve (1) in accordance with one of the preceding claims,
**characterised in**
**that**, when the armature (2) is displaced in the direction of the core and the valve stem (8) is located in the closure position, a spring force of the pressure limiting spring (13) is greater than the spring force of the return spring (18).

5. The electromagnetic valve (1) in accordance with one of the preceding claims,
**characterised in**
**that**, the pin (12) is supported directly on the valve stem (8).

6. The electromagnetic valve (1) in accordance with one of the preceding claims,
**characterised in**
**that**, the valve stem (8) operates in conjunction with a closure body (9), in particular a valve ball, which in its closure position is pressed by the valve stem (8) against a valve seat.

7. The electromagnetic valve (1) in accordance with one of the preceding claims,
**characterised in**
**that**, the electromagnetic valve (1) is voltage controlled.

8. The electromagnetic valve (1) in accordance with one of the preceding claims,
**characterised in**
**that**, the magnetic flux circuit and the pressure limiting spring (13) are designed such that at a minimum control voltage necessary for the closure of the electromagnetic valve the closing force applied by way of the armature (2) to the valve stem (8) is less than the spring force applied to the valve stem (8), and in that at a maximum control voltage, as well as at a limiting voltage located between the minimum control voltage and the maximum control voltage, the closing force applied by way of the armature (2) to the valve stem (8) is greater than the spring force applied by way of the pressure limiting spring (13) to the valve stem (8).

9. The electromagnetic valve (1) in accordance with one of the preceding claims,
**characterised in**
**that**, with the minimum voltage for purposes of closing the electromagnetic valve (1), and the valve stem (8) located in the closure position, the armature (2) is spaced apart from the core (6) by way of a residual air gap, and/or with the maximum permissible voltage the armature is supported on the core (6), in particular by way of an anti-adhesion disc (19) or an anti-adhesion groove.

10. An internal combustion engine cooling system (23) with a coolant pump (24) and with a slider (25) for purposes of switching between a small and a large coolant circuit, wherein the slider (25) can be actuated hydraulically by way of a coolant pressure in a switching chamber (26) and wherein in accordance with one of the preceding claims, an electromagnetic valve (1) closes a bypass, in particular to a coolant tank, when the valve stem (8) is located in the closure position, for purposes of increasing the coolant pressure, and wherein in the event of an inadmissibly high coolant pressure in the switching chamber (26), despite an energised winding (3) and an armature (2) displaced in the direction of the core (6) by virtue of the force exerted by the coolant, in particular by way of a valve closure body, onto the valve stem, the valve stem (8) can be displaced against the spring force of the pressure limiting spring (13) with the simultaneous displacement of the pin (12) from the closure position for the opening of the electromagnetic valve (1), and thereby opens the bypass.

11. The internal combustion engine cooling system (23) in accordance with claim 10,
**characterised in**
**that**, the electromagnetic valve (1), the slider (25) and the coolant pump (24) are arranged in a common housing, preferably a cast metal housing.

## Revendications

1. Soupape électromagnétique (1), en particulier pour la fermeture d'une dérivation dans un circuit d'agent de refroidissement d'un moteur à combustion interne, avec un enroulement excitable (3) et un induit (2) déplaçable en direction d'un noyau par excitation de l'enroulement, qui applique une force à un poussoir de soupape (8), lorsque l'enroulement (3) est excité, en direction d'une position de fermeture, en particulier contre la force élastique d'un ressort de rappel (18), dans laquelle il est prévu un goujon (12) déplaçable en même temps que l'induit lors de l'excitation de l'induit (2) pour déplacer le poussoir de soupape (8) en direction de la position de fermeture, au moyen duquel le poussoir de soupape (8) peut être soumis à une force en direction de la position de fermeture par déplacement de l'induit (2) en cas d'excitation, et qui peut être soumis à une force élastique en direction de la position de fermeture du poussoir de soupape (8) au moyen d'un ressort de limitation de pression (13) et qui est déplaçable par le poussoir de soupape (8), contre la force élastique du ressort de limitation de pression (13), lors d'un mouvement de poussoir de soupape axial du poussoir de soupape (8), à partir de sa position de fermeture pour l'ouverture de la soupape électromagnétique (1) malgré l'induit (2) déplacé en direction du noyau (6),
**caractérisée en ce que** le goujon (12) et le ressort de limitation de pression (13) sont disposés dans une cage disposée entre l'induit (2) et le poussoir de soupape (8) pour limiter un allongement maximal du ressort de limitation de pression (13), et **en ce que** le ressort de limitation de pression (13) s'appuie sur le côté détourné du goujon sur un élément de butée fixé sur et/ou dans la cage (22), en particulier une douille, par la position axiale duquel, par rapport à une butée de goujon (16) dans la cage (22), la précontrainte du ressort de limitation de pression (13) peut être et/ou est réglée.

2. Soupape électromagnétique (1) selon la revendication 1, **caractérisée en ce qu'**il est prévu des moyens permettant de respecter une précontrainte minimale du ressort de limitation de pression.

3. Soupape électromagnétique (1) selon une des revendications 1 ou 2, **caractérisée en ce que** de préférence la cage est déplacée axialement dans le noyau, au moins en partie, de préférence entièrement, lorsque le poussoir de soupape (8) se trouve en position de fermeture.

4. Soupape électromagnétique (1) selon l'une quelconque des revendications précédentes, **caractérisée en ce qu'**une force élastique du ressort de limitation de pression (13) est plus grande que la force élastique du ressort de rappel (18) lorsque l'induit (2) est déplacé en direction du noyau et que le poussoir de soupape (8) se trouve dans la position de fermeture.

5. Soupape électromagnétique (1) selon l'une quelconque des revendications précédentes, **caractérisée en ce que** le goujon (12) s'appuie directement sur le poussoir de soupape (8).

6. Soupape électromagnétique (1) selon l'une quelconque des revendications précédentes, **caractérisée en ce que** le poussoir de soupape (8) coopère avec un corps de fermeture (9), en particulier une bille de soupape, qui est pressé dans sa position de fermeture contre un siège de soupape par le poussoir de soupape (8) .

7. Soupape électromagnétique (1) selon l'une quelconque des revendications précédentes, **caractérisée en ce que** la soupape électromagnétique (1) est commandée par la tension.

8. Soupape électromagnétique (1) selon l'une quelconque des revendications précédentes, **caractérisée en ce que** le circuit de flux magnétique et le ressort de limitation de pression (13) sont conçus de telle manière que, en présence d'une tension de commande minimale nécessaire pour la fermeture de la soupape électromagnétique, la force de fermeture exercée sur le poussoir de soupape (8) par l'intermédiaire de l'induit (2) soit inférieure à la force élastique appliquée au poussoir de soupape (8) et **en ce que**, en présence d'une tension de commande maximale, ainsi que d'une tension limite située entre la tension de commande minimale et la tension de commande maximale, la force de fermeture exercée sur le poussoir de soupape (8) par l'intermédiaire de l'induit (2) soit supérieure à la force élastique appliquée au poussoir de soupape (8) par le ressort de limitation de pression (13).

9. Soupape électromagnétique (1) selon l'une quelconque des revendications précédentes, **caractérisée en ce que**, en présence de la tension minimale pour la fermeture de la soupape électromagnétique (1) et avec le poussoir de soupape (8) se trouvant dans la position de fermeture, l'induit (2) est espacé du noyau (6) d'un entrefer résiduel et/ou, en présence de la tension maximale admissible, il s'appuie sur le noyau (6), en particulier par l'intermédiaire d'une rondelle antiadhésive (19) ou d'une rainure antiadhésive.

10. Système de refroidissement de moteur à combustion interne (23) avec une pompe à liquide de refroidissement (24) et avec un tiroir (25) pour commuter entre un petit ou un grand circuit d'agent de refroidissement, dans lequel le tiroir (25) peut être actionné hydrauliquement par une pression du liquide de refroidissement dans une chambre de commutation (26) et dans lequel une soupape électromagnétique (1) selon l'une quelconque des revendications précédentes ferme une dérivation, en particulier vers un réservoir d'agent de refroidissement, avec le poussoir de soupape (8) se trouvant dans la position de fermeture, pour augmenter la pression de l'agent de refroidissement et dans lequel, en présence d'une pression élevée inadmissible du liquide de refroidissement dans la chambre de commutation (26) bien que l'enroulement (3) soit excité et que l'induit (2) soit déplacé en direction du noyau (6), le poussoir de soupape (8) est déplaçable à partir de la position de fermeture pour l'ouverture de la soupape électromagnétique (1) en raison de la force exercée sur le poussoir de soupape par le liquide de refroidissement, en particulier par l'intermédiaire d'un corps de fermeture de la soupape, contre la force élastique du ressort de limitation de pression (13) avec déplacement simultané du goujon (12) et ouvre ainsi la dérivation.

11. Système de refroidissement de moteur à combustion interne (23) selon la revendication 10, **caractérisé en ce que** la soupape électromagnétique (1), le tiroir (25) et la pompe à liquide de refroidissement (24) sont disposés dans un boîtier commun, de préférence un boîtier métallique moulé.
